# EUROPEAN PATENT APPLICATION

(11) **EP 4 813 804 A1**
(43) Date of publication of application: **30.09.2026**
(21) Application number: 26167861.9
(22) Date of filing: 26.03.2026
(51) Int. Cl.: B62D 5/04, B62D 3/02

(54) **STEERING SYSTEM**

(30) Priority: 28.03.2025 LU 600847
(71) Applicant: Nabtesco Corporation, Tokyo 102-0093 (JP)
(72) Inventor: THORN, Tobias, 56370 Dörsdorf (DE)
(74) Representative: Hoffmann, Jürgen

(57) **Abstract**

The invention relates to a steering system (1) comprising an electric motor (2) and a steering gear device (3), which has a first steering gear input shaft (4) that is couplable to a steering shaft, a second steering gear input shaft (5) that is drivably coupled to the electric motor (2) by means of a transmission gear device (7), and a steering gear output shaft (6). The steering system (1) is characterized in that it comprises i) a cycloidal gear (8) and a strain wave gear (9) or ii) two strain wave gears (9).

## Description

The invention relates to a steering system comprising an electric motor and a steering gear device comprising a first steering gear input shaft that is couplable to a steering shaft, a second steering gear input shaft that is drivably coupled to the electric motor by means of a transmission gear device, and a steering gear output shaft.

A power steering system is known from DE 20 2014 101 670 U1. The power steering system has a steering wheel shaft on which a first worm screw and a worm wheel are arranged coaxially. The power steering system further has an auxiliary force shaft on which a second worm screw meshing with the worm wheel is arranged coaxially. The power steering system additionally has a segment shaft with a gear segment which meshes with the first worm screw.

A steering gear for an electromechanical steering system for a vehicle is known from DE 10 2019 127 965 A1. The steering gear has an input shaft couplable or coupled to a steering column of the steering system, a segment shaft couplable or coupled to a pitman arm of the steering system, an angular gear, a servo gear, and an electric motor for driving the servo gear. The angular gear is configured as a bevel gear. The input shaft and the electric motor are connected to the servo gear. The servo gear is connected to the angular gear. The angular gear is connected to the segment shaft. The angular gear is configured to transmit torque from the servo gear to the segment shaft via two transmission paths.

A power steering system of a non-track-bound motor vehicle configured as a recirculating ball steering system is known from DE 102 34 596 B3. To increase the variability of the recirculating ball steering system, a servo motor configured as an electric motor is arranged at a steering gear input to reduce steering hand forces.

A commercial vehicle steering system is known from DE 102015217045 A1, which comprises a steering gear for transmitting a manual torque applied at a steering wheel to a pitman arm. The steering gear has an electric motor for providing an auxiliary torque for steering assistance, wherein the steering assistance is provided exclusively electrically over the entire operating range of the steering system. The steering gear further has an input shaft and an output shaft whose rotational axes are skewed relative to one another. The steering gear further has a first gear device which couples the input shaft to the output shaft, and a second gear device to which the electric motor is connected on the input side. The second gear device is coupled on the output side to the output shaft, and a reduction gear stage of the gear device is arranged coaxially with the output shaft.

It is the object of the present invention to provide a steering system of the type mentioned above that offers particularly high precision and load capacity.

The object of the present invention is to provide a steering system of the type mentioned above that offers particularly high precision and load capacity.

This object is solved by a steering system characterized in that the steering system includes
i. a cycloidal gear and a strain wave gear, or
ii. two strain wave gears.

The combination of a strain wave gear with a cycloidal gear or another strain wave gear within the steering gear device and the transmission gear of the steering system according to the invention offers numerous synergistic advantages in terms of precision, efficiency, load capacity, and durability.

In accordance with the invention, it has been recognized that the reduction ratio from the first steering gear input shaft, which is connected to a steering handle of a commercial vehicle in a rotationally fixed manner and without further over- or under-reduction, to the steering gear output shaft is advantageously in the range of 1:22 to 1:26, preferably 1:24, so that the ratio between the steering angle at the steering wheel and the steering movement at the wheel corresponds to what drivers are usually accustomed to. At the same time, with regard to the coupling of the motor, it should be noted that, due to the very high torque required at the steering gear output shaft, for example 8,000 Nm, a very high reduction ratio, for example in the range of 1:900 to 1:1,500, in particular 1:1,000, must be achieved in the torque path from the motor to the steering gear output shaft in order to avoid the use of an excessively large motor.

In this respect, the gear stage that has the steering gear output shaft or is directly coupled to the steering gear output shaft must advantageously have as large a reduction ratio as possible. Since the gear stage that has the steering gear output shaft or is directly coupled to the steering gear output shaft is also located in the torque path from the first steering gear input shaft to the steering gear output shaft, special boundary conditions arise for the reduction ratio of the gear stage, which (alone or with at least one further gear stage) is drivably upstream in this torque path of the gear stage that has the steering gear output shaft or is directly coupled to the steering gear output shaft.

The combination of cycloidal gear and strain wave gear, or the use of two strain wave gears, allows these high reduction ratios to be achieved in a compact manner, which is advantageous for use in commercial vehicles. The steering system according to the invention enables a compact design, while still achieving the high reduction ratios mentioned above. While other types of gearboxes, such as planetary or spur gears, would require either a large number of stages or a bulky design for such high reduction ratios, the combination of strain wave gears and cycloidal gears according to the invention enables space-saving integration into the steering system. This is particularly advantageous for commercial vehicles, as the installation space for the steering system is limited and a compact design does not unnecessarily restrict the vehicle architecture. The combination of cycloidal gear and strain wave gear or the use of two strain wave gears in the steering system according to the invention is characterized by high torque capacity, small size, high precision, and low mechanical losses.

In an advantageous embodiment, the steering gear device and the transmission gear device, regardless of whether they include further gearboxes, each comprise a cycloidal gear or a strain wave gear. Such an embodiment has the particular advantage that the above-mentioned high reduction ratios can be achieved in a compact manner both in the torque path from the motor to the steering gear output shaft and in the torque path from the first steering gear output shaft to the steering gear output shaft.

The steering system can be advantageously configured so that the torque path from the first steering gear input shaft to the steering gear output shaft has at least two drivably connected gear stages. This enables a compact realization of the reduction ratio and a positioning and arrangement of the first steering gear input shaft relative to the steering gear output shaft that is advantageous for implementation in a commercial vehicle, as explained in detail below.

A particularly advantageous embodiment is one in which a first of the gear stages is configured as a bevel gear, worm gear, spindle gear, crossed helical gear, or strain wave gear, while a second gear stage, which is drivably downstream of the first gear stage, is configured as a strain wave gear or cycloidal gear. This combination of different gear technologies allows the respective advantages to be optimally exploited. For example, a bevel gear, a worm gear, and a crossed helical gear advantageously enable an angle change in the torque transmission, which facilitates integration into different vehicle architectures. The use of a crossed helical gear is particularly advantageous because it allows the required reduction ratio of the first gear stage to be achieved with a very compact design and, at the same time, an arrangement of the first steering gear input shaft relative to the steering gear output shaft that is advantageous in terms of the installation situation and the utilization of installation space in a commercial vehicle. In an advantageous embodiment, the axis of rotation of a first helical gear of the crossed helical gear lies in a plane that forms an angle in the range of 70 to 110 degrees, in particular 90 degrees, with the axis of rotation of the second helical gear of the crossed helical gear. This embodiment contributes in a particularly advantageous manner to positioning the first steering gear input shaft and the steering gear output shaft in an optimal alignment with respect to each other in order to achieve a particularly good adaptation to the installation situation and efficient use of the installation space in a commercial vehicle. The combination of the aforementioned options for a first gear stage with a strain wave gear or cycloidal gear drivably downstream ensures that the final torque transmission takes place with high reduction and minimal backlash.

A crossed helical gear is to be understood as a gear having two helically toothed gears which are in direct meshing engagement with one another and whose rotational axes are skewed relative to one another. In particular, the axis of rotation of one of the gears may lie in a plane whose surface normal vector is parallel to the axis of rotation of the other gear. It may advantageously be provided that the following applies to both helically toothed gears: L < D π sin β, wherein L is the axial length of the gear, D is the root circle diameter of the helical toothing, π is the mathematical constant pi, and β is the helix angle.

Preferably, the steering gear device housing has fastening elements for fastening the steering gear device housing to a higher-level structure, in particular a vehicle body. The fastening elements of the steering gear device housing can, for example, be configured as apertures or as threaded holes for fastening screws.
with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured
In a particularly advantageous embodiment, the steering gear device housing is configured in such a way that, with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured. Such a steering system offers the possibility of easily implementing a mirror-symmetrical steering system using identical parts, which simplifies adaptation to different vehicle variants, in particular for left-hand and right-hand drive vehicles, without the need for costly redesigns. This leads to more efficient production and reduces both development and manufacturing costs.

In general, the steering system components can be advantageously configured in such a way that with this steering system components, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured. A particular advantage of this embodiment is the possibility of using identical parts. Since all steering system components are designed so that they can be used in a mirror-symmetrical manner, there is no need for different components for left-hand and right-hand drive vehicles. This leads to a reduction in the number of variants, which significantly lowers both production and logistics costs. The use of identical parts also allows economies of scale to be exploited in production, which reduces manufacturing costs. Assembly is also simplified, as the same assembly can be used regardless of the installation direction. At the same time, serviceability is improved, as fewer different components need to be kept in stock for spare parts supply.

Alternatively, in an embodiment which includes worms, spindles and/or helically toothed gears, for example as components of a gear stage configured as a worm gear, a spindle gear or a crossed helical gear, the steering system components may be configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft and the fastening elements, can be manufactured when all worms, spindles and helically toothed gears are replaced by identical ones having an opposite helix direction. Such an embodiment likewise largely provides the advantage of using identical parts.

Whether it is necessary to replace the worms, spindles and helically toothed gears by identical ones having an opposite helix direction depends on how the remaining part of the steering arrangement and the integration of the steering system within the remaining steering elements of right-hand-drive and left-hand-drive vehicles are configured.

A particularly advantageous embodiment provides that the steering gear device housing, in particular in an opening in its housing wall, has at least one input shaft bearing receptacle for a steering gear input shaft bearing. A steering gear input shaft bearing can be arranged in the input shaft bearing receptacle for the rotatable mounting of the steering gear input shaft. This enables stable mounting of the steering gear input shaft. The steering gear input shaft bearing can advantageously be configured as a rolling bearing, in particular as a ball bearing or as a roller bearing or as an angular contact roller bearing.

A particularly advantageous embodiment is one in which the steering gear device housing has, in addition to the input shaft bearing receptacle, a further input shaft bearing receptacle which is arranged symmetrically with respect to a horizontal mirror plane in relation to the first input shaft bearing receptacle. A steering gear input shaft bearing for supporting the steering gear input shaft can be arranged in the input shaft bearing receptacle. This symmetrical design facilitates production and enables cost-effective implementation of left-hand and right-hand drive variants with regard to the rotational bearing of the steering gear input shaft.

In particular, it may be advantageous to provide that, depending on whether a steering system is to be manufactured for a right-hand drive vehicle or for a left-hand drive vehicle, the steering gear input shaft bearing is inserted either into the input shaft bearing receptacle or into the additional input shaft bearing receptacle. Preferably, the additional input shaft bearing receptacle is closed with a cover when the steering gear input shaft bearing is inserted into the input shaft bearing receptacle. Conversely, the input shaft bearing receptacle is preferably closed with a cover when the steering gear input shaft bearing is inserted into the additional input shaft bearing receptacle. The cover is preferably configured in such a way that it can be removed without damage, for example for maintenance purposes.

Alternatively, it may be advantageous to provide a steering gear input shaft bearing in both the input shaft bearing receptacle and the additional input shaft bearing receptacle in order to securely support the first steering gear input shaft for rotation. Depending on whether a steering system for a right-hand drive vehicle or a steering system for a left-hand drive vehicle is to be manufactured, the steering gear input shaft then protrudes from the steering gear device housing either through the opening of the input shaft bearing receptacle or through the opening of the further input shaft bearing receptacle. The opening of the other input shaft bearing receptacle is preferably closed with a cover.

The steering gear device housing may advantageously comprise an output shaft bearing receptacle for a steering gear output shaft bearing, thereby enabling precise rotational support of the steering gear output shaft. A steering gear output shaft bearing may be arranged in the output shaft bearing receptacle.

A particularly advantageous embodiment is one in which the steering gear device housing has, in addition to the output shaft bearing receptacle, a further output shaft bearing receptacle which is arranged symmetrically with respect to a mirror plane in relation to the first output shaft bearing receptacle. A steering gear output shaft bearing for supporting the steering gear output shaft can be arranged in the output shaft bearing receptacle. This symmetrical design facilitates production and enables cost-effective implementation of left-hand and right-hand drive variants with regard to the rotational bearing of the steering gear output shaft.

In particular, it may be advantageous to provide that, depending on whether a steering system for a right-hand drive vehicle or a steering system for a left-hand drive vehicle is to be manufactured, the steering gear output shaft bearing is inserted either into the output shaft bearing receptacle or into the additional output shaft bearing receptacle. Preferably, the additional output shaft bearing receptacle is closed with a cover when the steering gear output shaft bearing is inserted into the output shaft bearing receptacle. Conversely, the output shaft bearing receptacle is preferably closed with a cover when the steering gear output shaft bearing is inserted into the additional output shaft bearing receptacle. The cover is preferably configured in such a way that it can be removed without damage, for example for maintenance purposes.

A method for manufacturing a plurality of steering systems is particularly advantageous, in which steering system components are first provided. These include, in particular, a plurality of identical electric motors, a plurality of steering gear devices, and a plurality of steering gear device housings. The steering gear devices each include a first steering gear input shaft that is couplable with a steering shaft, a second steering gear input shaft that is or is couplable with the electric motor for drivable coupling, and a steering gear output shaft. The steering gear device housings each have fastening elements for fastening the steering gear device housing to a higher-level structure, in particular a vehicle body, wherein the steering gear device housings are configured in such a way that a mirror-symmetrical steering system can be produced with them, at least with regard to the arrangement and alignment of the first and second steering gear input shafts, the steering gear output shaft, and the fastening elements. mirror plane, at least with regard to the arrangement and alignment of the first and second steering gear input shafts, the steering gear output shaft, and the fastening elements. Preferably, the steering gear device housings are configured in such a way that they can be used to produce steering systems for both right-hand drive vehicles and left-hand drive vehicles.

A particularly advantageous embodiment is one in which the steering systems for left-hand drive and right-hand drive vehicles are assembled entirely from the same steering system components. This leads to a significant reduction in the variety of parts and thus to cost savings in production and logistics. Standardizing the components also simplifies warehousing and reduces the complexity of assembly.

In another advantageous embodiment, the steering systems for left-hand drive and right-hand drive vehicles can also consist of the same components, with the exception that worms, spindles, or helical gears with opposite helix directions are used.

As mentioned above, it may be advantageous to provide, depending on whether a steering system is to be manufactured for a right-hand drive vehicle or for a left-hand drive vehicle, a steering gear input shaft bearing for rotary mounting of the steering gear input shaft is inserted either into an input shaft bearing receptacle or into a further input shaft bearing receptacle arranged mirror-symmetrically with respect to the input shaft bearing receptacle.

As already mentioned above, it may be advantageous to provide, depending on whether a steering system is to be manufactured for a right-hand drive vehicle or for a left-hand drive vehicle, a steering gear output shaft bearing for rotary mounting of the steering gear output shaft is inserted either into an output shaft bearing receptacle or into a further output shaft bearing receptacle which is arranged mirror-symmetrically with respect to the output shaft bearing receptacle.

A particularly advantageous embodiment is one in which the transmission gear device, especially in series connection with a strain wave gear or a cycloidal gear, has a traction mechanism gear. A traction mechanism gear, for example in the form of a toothed belt or chain gear, enables low-noise and low-vibration power transmission. In addition, a traction mechanism gear allows the electric motor to be positioned relative to the steering gear device in a manner that is particularly advantageous for utilizing the available installation space in a vehicle.

Alternatively, the transmission gear device can be configured as a spur gear or have one. In order to achieve an advantageous transmission ratio with a compact design, the spur gear can advantageously have three spur gears.

Alternatively, the transmission gear device, especially in series connection with a strain wave gear or a cycloidal gear, may comprise a spur gear. In order to achieve an advantageous transmission ratio with a compact design, the spur gear may advantageously comprise three spur gears.

In general, it may be advantageous for the transmission gear device to include a strain wave gear.

In an advantageous embodiment, the steering gear device has two strain wave gears that are drivably connected in series. This arrangement enables a particularly high reduction ratio combined with very high precision, ensuring accurate and backlash-free steering movement. An embodiment in which the two strain wave gears are nested inside each other is particularly advantageous. This compact design saves installation space and reduces the overall weight of the steering gear device, which is particularly advantageous in commercial vehicle applications. In this case, the output of the inner strain wave gear, for example the flex spline or circular spline of the inner strain wave gear, can be connected in a rotationally fixed manner to the wave generator of the outer strain wave gear or manufactured as a single piece with it in order to drive it. The output of the outer strain wave gear can be connected in a rotationally fixed manner to the steering gear output shaft or be manufactured as a single piece with it.

In particular, the steering system can be configured, for example by means of the special embodiments of the transmission gear device described above, in such a way that the motor is arranged offset, in particular axis-parallel offset, to the second gear stage and/or to the steering gear output shaft. This arrangement enables a space-saving design and allows flexible integration of the motor into the installation space of the vehicle.

Alternatively, the steering system can be designed in an embodiment where the motor is arranged coaxially with the second gear stage and/or coaxially with the steering gear output shaft. This embodiment ensures direct and low-loss power transmission, which increases the efficiency of the system. It also results in a compact unit, especially radially, which facilitates installation and maintenance.

The steering gear device housing can advantageously be configured as a multi-part design. A multi-part embodiment of the steering gear device housing facilitates easier assembly. A multi-part embodiment of the steering gear device housing also facilitates easier maintenance, as the enclosed steering system components are more easily accessible.

A particularly advantageous embodiment is one in which the steering gear device housing encloses at least the gear stages drivably connected in series. This protects the steering system components of the gear stages from external influences such as dust, moisture or mechanical loads and thus contributes to the longevity and reliability of the steering system.

In addition, the steering gear device housing may enclose the transmission gear device. This ensures optimum protection against contamination and mechanical influences.

A particularly advantageous embodiment is one in which the distance of a plane perpendicular to the steering gear output shaft, in which the axis of rotation of the first steering gear input shaft is located, from the plane in which the portion of the outer side of the steering gear device housing directly surrounding the output shaft bearing receptacle is located, lies in the range from 70 mm to 90 mm or in particular amounts to 80 mm. These dimensions enable a good balance between compactness, structural stability and utilization of the available installation space.

The steering system may advantageously be configured such that the rotational axes of the first steering gear input shaft and the steering gear output shaft are skewed relative to one another. This arrangement allows particularly efficient utilization of the installation space and integration into a vehicle. In particular, the rotational axes of the first steering gear input shaft and the steering gear output shaft may additionally be arranged in planes perpendicular to one another, which enables particularly efficient utilization of the installation space and integration into a vehicle. A particularly advantageous embodiment is one in which the rotational axes of the first steering gear input shaft and the steering gear output shaft have a spacing of 80 mm to 100 mm, in particular 90 mm.

A particularly advantageous steering arrangement comprises a steering system according to the invention and a steering shaft which is operatively connected to a steering handle, wherein the steering shaft is, preferably directly, coupled to the first steering gear input shaft or is manufactured integrally therewith.

A particularly advantageous vehicle, in particular a commercial vehicle, very particularly a truck or a bus, comprises a steering system according to the invention or a steering arrangement according to the invention.

In the drawing, the subject matter of the invention is illustrated by way of example and schematically and is described below with reference to the figures, wherein identical or functionally identical elements are usually provided with the same reference signs even in different embodiments.

The figures show:
- Fig. 1: a schematic illustration of a first embodiment of a steering system according to the invention,
- Fig. 2: an illustration of a second embodiment of a steering system according to the invention,
- Fig. 3: an illustration of a third embodiment of a steering system according to the invention,

- Fig. 4: an illustration of a fourth embodiment of a steering system according to the invention,
- Fig. 5: shows a perspective view from the front of a fifth embodiment of a steering system according to the invention and, in a further perspective view from the front, a steering system that is mirror-symmetrical to the steering system with respect to a mirror plane, in particular a vertical mirror plane,
- Fig. 6: a perspective view from behind of the fifth embodiment of a steering system according to the invention and, in a further perspective view from behind, a steering system that is mirror-symmetrical to the steering system with respect to a mirror plane, in particular a vertical mirror plane,
- Fig. 7: in a side view, the fifth embodiment of a steering system according to the invention, and in a further side view from behind, a steering system that is mirror-symmetrical with respect to the steering system in relation to a mirror plane, in particular a vertical mirror plane,
- Fig. 8: a sixth embodiment of a steering system according to the invention in a sectional view,
- Fig. 9: the sixth embodiment of a steering system according to the invention in a further sectional view,
- Fig. 10: the sixth embodiment of a steering system according to the invention in a side view,
- Fig. 11: a perspective view from the front of the sixth embodiment of a steering system according to the invention and, in a further perspective view from the front, a steering system that is mirror-symmetrical with respect to the steering system in relation to a mirror plane, in particular a vertical mirror plane,
- Fig. 12: shows a perspective view from behind of the sixth embodiment of a steering system according to the invention and, in a further perspective view from behind, a steering system that is mirror-symmetrical to the steering system with respect to a mirror plane, in particular a vertical mirror plane, and
- Fig. 13: shows a side view of the sixth embodiment of a steering system according to the invention and, in a further side view from the rear, a steering system that is mirror- symmetrical with respect to the steering system in relation to a mirror plane, in particular a vertical mirror plane.

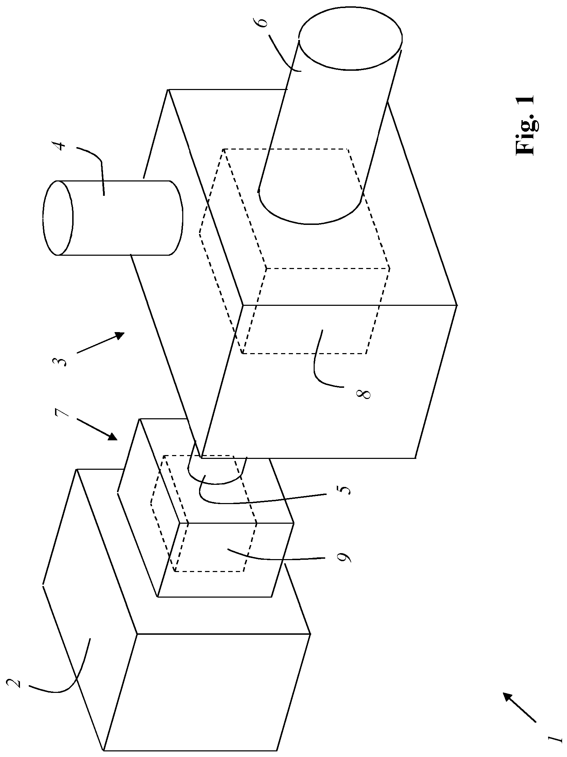

Fig. 1 shows a schematic illustration of a first embodiment of a steering system 1 according to the invention.

The steering system 1 comprises an electric motor 2 and a steering gear device 3, which has a first steering gear input shaft 4 that is couplable to a steering shaft, a second steering gear input shaft 5 that is drivably coupled to the electric motor 2 by means of a transmission gear device 7, and a steering gear output shaft 6. The steering system 1 includes a cycloidal gear 8 and a strain wave gear 9, wherein the transmission gear device 7 includes the strain wave gear 9 and the steering gear device 3 includes the cycloidal gear 8.

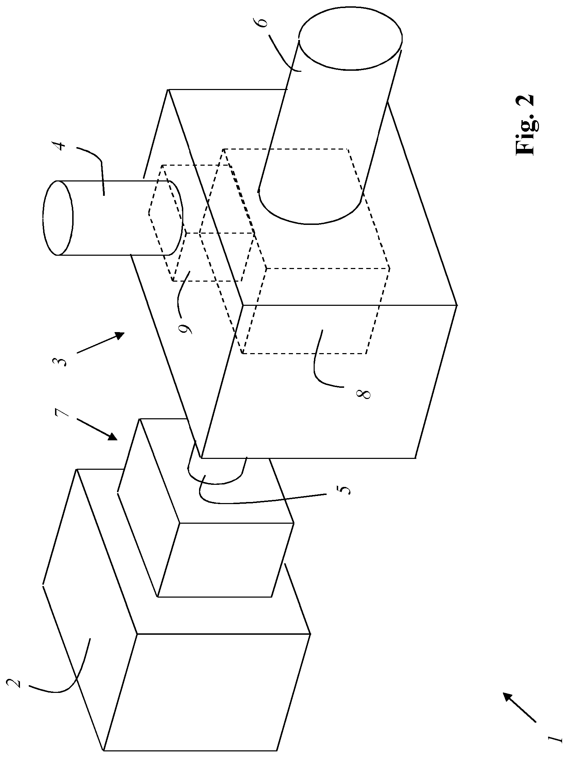

Fig. 2 shows a schematic illustration of a second embodiment of a steering system 1 according to the invention.

The steering system 1 comprises an electric motor 2 and a steering gear device 3, which has a first steering gear input shaft 4 that is couplable to a steering shaft and a second steering gear input shaft 5 that is drivably coupled to the electric motor 2 by means of a transmission gear device 7, and a steering gear output shaft 6. The steering system 1 includes a cycloidal gear 8 and a strain wave gear 9, wherein the steering gear device 3 includes the strain wave gear 9 and the cycloidal gear 8 in the torque path from the first steering gear input shaft 4 to the steering gear output shaft 6. The cycloidal gear 8 is connected drivably downstream of the strain wave gear 9.

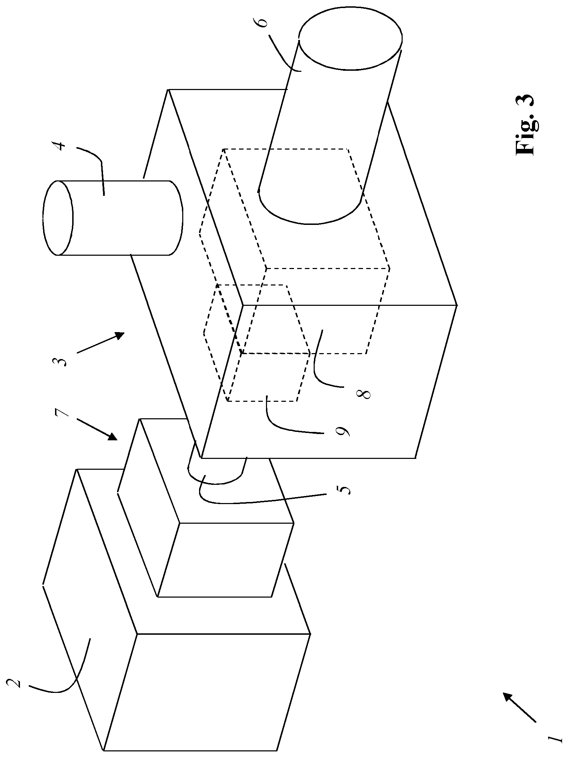

Fig. 3 shows a schematic illustration of a third embodiment of a steering system 1 according to the invention.

The steering system 1 comprises an electric motor 2 and a steering gear device 3, which has a first steering gear input shaft 4 that is couplable to a steering shaft, a second steering gear input shaft 5 that is drivably coupled to the electric motor 2 by means of a transmission gear device 7, and a steering gear output shaft 6. The steering system 1 includes a cycloidal gear 8 and a strain wave gear 9, wherein the steering gear device 3 includes the strain wave gear 9 and the cycloidal gear 8 in the torque path from the second steering gear input shaft 5 to the steering gear output shaft 6. The cycloidal gear 8 is connected drivably downstream of the strain wave gear 9.

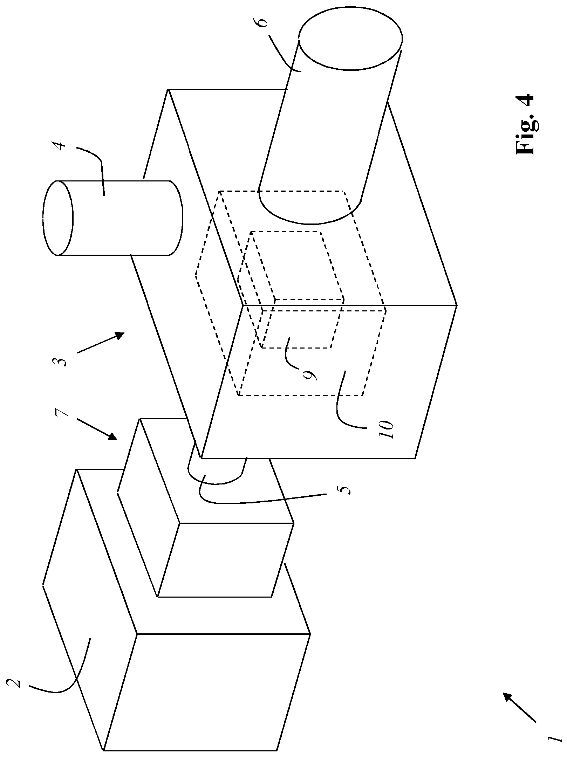

Fig. 4 shows a schematic illustration of a third embodiment of a steering system 1 according to the invention.

The steering system 1 comprises an electric motor 2 and a steering gear device 3, which has a first steering gear input shaft 4 that is couplable to a steering shaft, a second steering gear input shaft 5 that is drivably coupled to the electric motor 2 by means of a transmission gear device 7, and a steering gear output shaft 6. The steering system 1 includes two strain wave gears 9, 10, namely a strain wave gear 9 and a further strain wave gear 10. The two strain wave gears 9, 10 are connected drivably in series and arranged nested within one another. Here, the output of the first strain wave gear 9, for example the flex spline or the circular spline of the first strain wave gear 9, can be connected in a rotationally fixed manner to the wave generator of the second strain wave gear 10 or be manufactured in one piece with it in order to drive it. The output of the second strain wave gear 10 can be connected in a rotationally fixed manner to the steering gear output shaft 6 or be manufactured integrally with it.

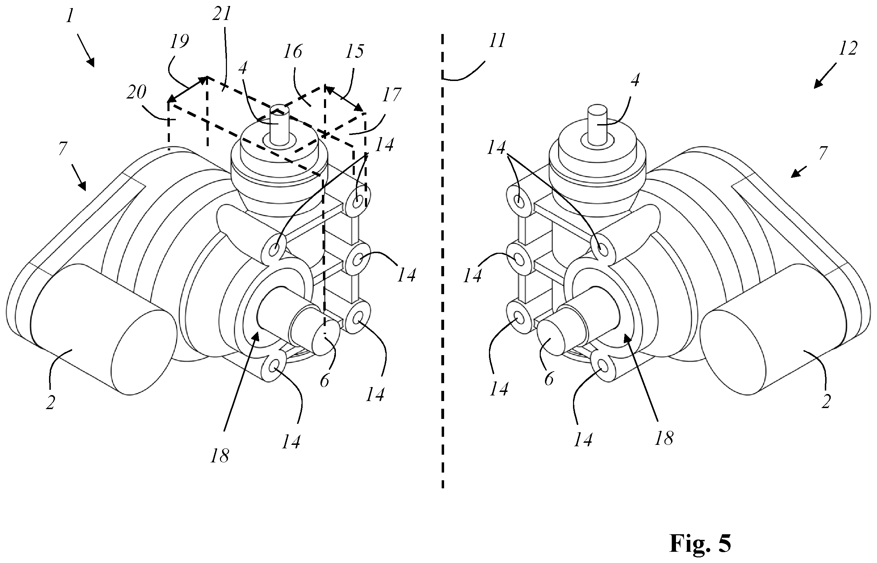

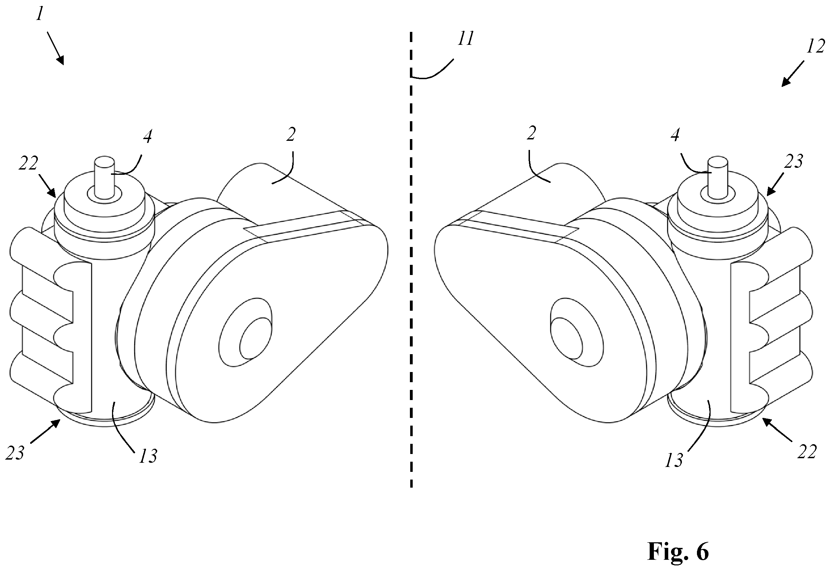

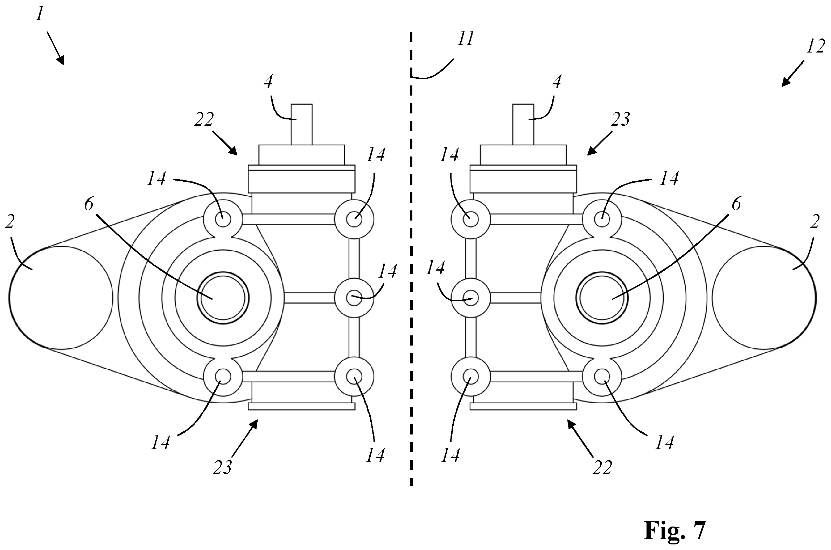

Figures 5 to 7 show a fifth embodiment of a steering system 1 according to the invention and, in a further perspective view from the front, a steering system 12 that is mirror-symmetrical to the steering system 1 with respect to a, in particular vertical, mirror plane 11. The steering system 1 has an electric motor 2 and a steering gear device 3, which has a first steering gear input shaft 4 that is couplable to a steering shaft and a second steering gear input shaft 5 (not visible in Figures 5 to 7) that is drivably coupled to the electric motor 2 by means of a transmission gear device 7, and a steering gear output shaft 6. The motor 2 is coupled to the second steering gear input shaft 5 by means of a transmission gear device 12.

The steering system 1 includes (not illustrated in Figures 5 to 7) a cycloidal gear 8 and a strain wave gear 9 or two strain wave gears 9, 10.

The steering system 1 consists of steering system components, which include at least the electric motor 2 and the steering gear device 3 and the first steering gear input shaft 4 and the second steering gear input shaft 5 as well as the steering gear output shaft 6. The steering system components also include a steering gear device housing 13, which has several fastening elements 14 for fastening the steering gear device housing 7 to a higher-level structure, in particular a vehicle body. The fastening elements 14 of the steering gear device housing 13 can be configured, for example, as apertures or as threaded holes for fastening screws.

The steering gear device housing 13 is configured such that, with this housing, a steering system 12 that is mirror-symmetrical to the steering system 1 with respect to a mirror plane 11, in particular a vertical mirror plane, at least with regard to the arrangement and orientation of the first steering gear input shaft 4, the second steering gear input shaft 5, the steering gear output shaft 6 and the fastening elements 14, can be manufactured, as illustrated in Figures 5 to 7.

The distance 15 of a plane 16 perpendicular to the steering gear output shaft 6, in which the axis of rotation of the first steering gear input shaft 4 is located, to the plane 17 in which the part of the outside of the steering gear device housing 7 that directly surrounds an output shaft bearing receptacle 18 is located is in the range of 70 mm to 90 mm and is preferably 80 mm.

The axes of rotation of the first steering gear input shaft 4 and the steering gear output shaft 6 are arranged in mutually perpendicular planes 20, 21, which are spaced apart 19 by a distance of 80 mm to 100 mm, in particular 90 mm.

The steering gear device housing 13 has an input shaft bearing receptacle 22 and a further input shaft bearing receptacle 23, which is arranged symmetrically with respect to a horizontal mirror plane in relation to the first input shaft bearing receptacle. A steering gear input shaft bearing is arranged in the input shaft bearing receptacle 22. A further steering gear input shaft bearing is arranged in the further input shaft bearing receptacle 23 in order to securely support the first steering gear input shaft 4 in a rotatable manner. The steering gear input shaft 4 protrudes outwards through the opening of the input shaft bearing receptacle 22.

If, on the other hand, instead of steering system 1, which may be configured for a left-hand drive vehicle, for example, a mirror-symmetrical steering system 11 for a right-hand drive vehicle is to be manufactured, the steering gear device housing 13 can be used in such a way that the steering gear input shaft 4 protrudes outwards from the steering gear device housing 13 through the opening of the further input shaft bearing receptacle 23.

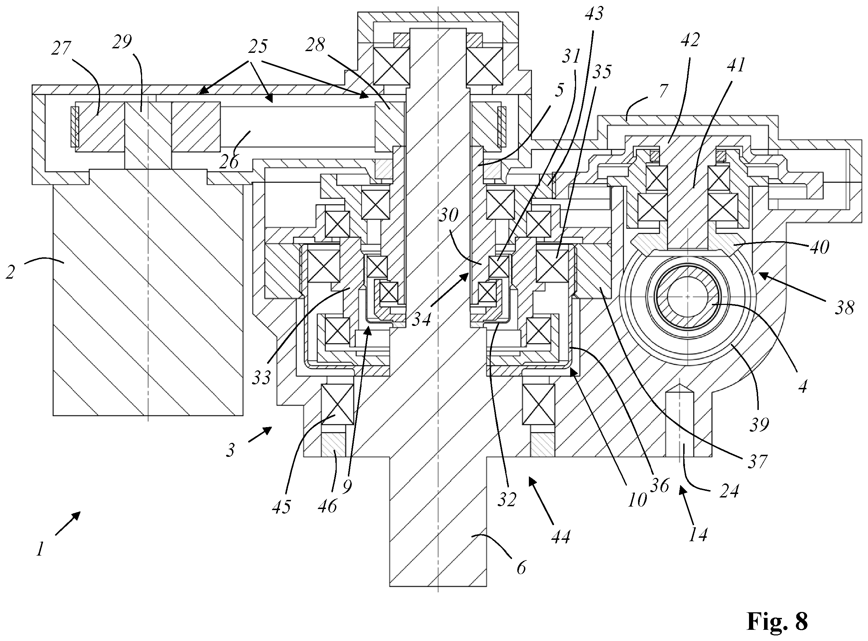

Figure 8 shows a sixth embodiment of a steering system 1 according to the invention in a sectional view.

The steering system 1 consists of steering system components, including an electric motor 2 and a steering gear device 3 with a (not shown) steering shaft and a couplable steering gear input shaft 5 drivably coupled to the electric motor 2, and a steering gear output shaft 6. The steering system components also include a steering gear device housing 7, which has several fastening elements 14 for fastening the steering gear device housing 7 to a higher-level structure, in particular a vehicle body. The fastening elements 14 of the steering gear device housing 7 can, for example, be configured as apertures or as threaded holes 24 for fastening screws.

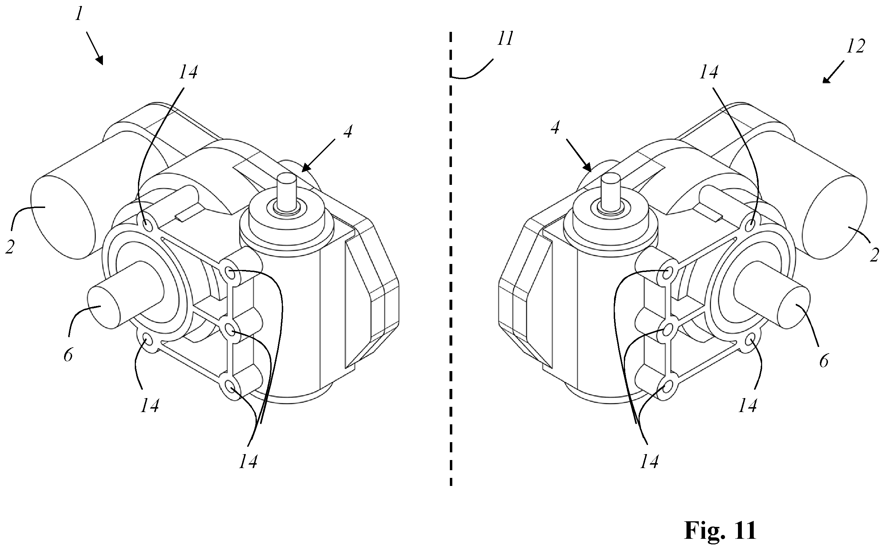

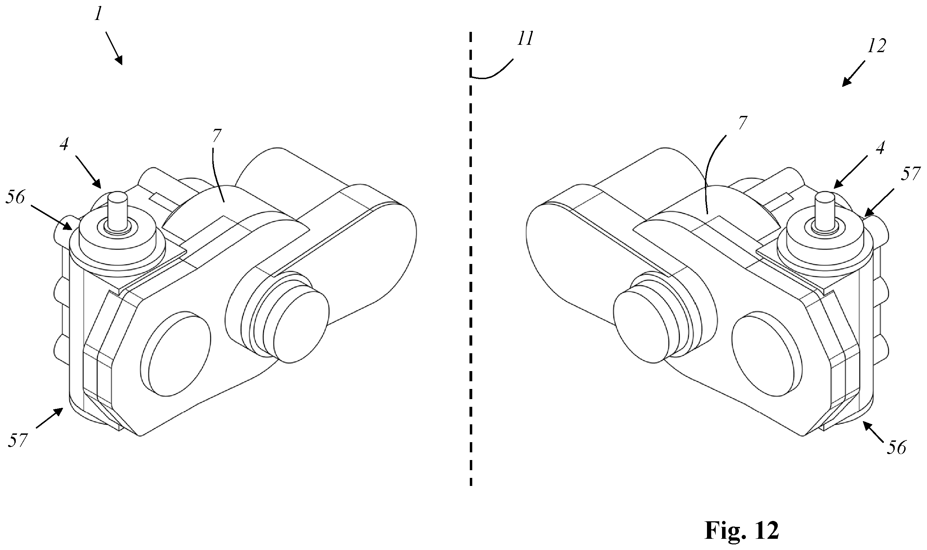

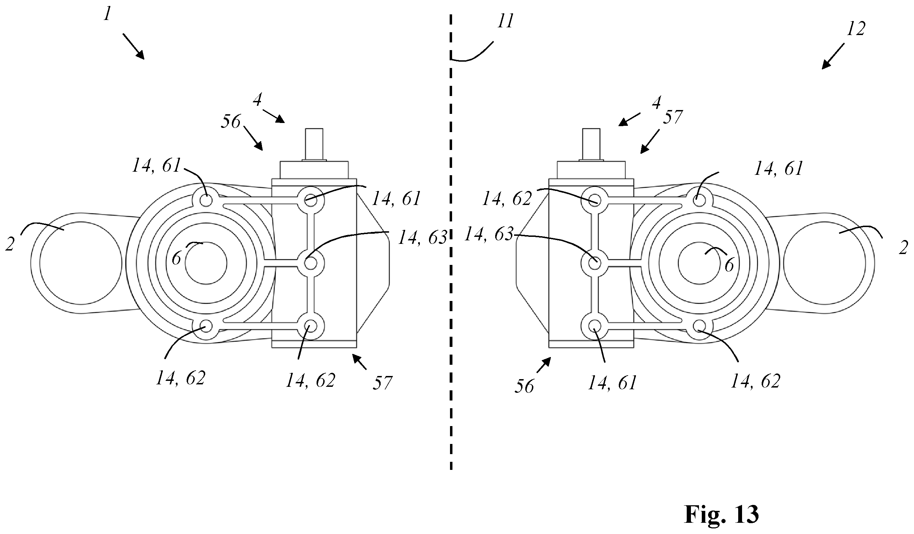

The steering gear device housing 7 is configured in such a way that it can be used to produce a steering system 12 that is mirror-symmetrical with respect to a mirror plane 11, in particular a vertical mirror plane, at least in terms of the arrangement and alignment of the first steering gear input shaft 4 and the second steering gear input shaft 5, the steering gear output shaft 6 and the fastening elements 14, which is illustrated in Figures 11 to 13 and explained in detail below. Specifically, in this embodiment, the steering system components are configured in such a way that they can be used to produce a steering system 12 that is mirror-symmetrical with respect to the mirror plane 11 in terms of the arrangement and alignment of the first steering gear input shaft 4 and the second steering gear input shaft 5, the steering gear output shaft 6, and the fastening elements 14.

The steering gear device 3 has a strain wave gear 9 and a further strain wave gear 10 in the torque path from the motor 2 to the steering gear output shaft 6, which are connected drivably in series.

The motor 2 is coupled to the second steering gear input shaft 5 by means of a transmission gear device 25. The transmission gear device 25 is configured as a traction drive with a traction means 26, a first traction means carrier 27, and a second traction means carrier 28. The first traction means carrier 27 is connected directly to the output shaft 29 of the motor 2 in a rotationally fixed manner. The second traction means carrier 28 is connected to the second steering gear input shaft 5 in a rotationally fixed manner.

The second steering gear input shaft 5 is configured as a hollow shaft and has an oval section 30 which acts as a deformation body of the wave generator 34 of the strain wave gear 9, which is rotatably mounted by means of a radially flexible rolling bearing 31. The oval section 30 presses the end of a pot-shaped flex spline 32 having an external toothing into an oval shape and engages it in meshing engagement with the internal toothing of a circular spline 33 at two meshing engagement positions. The oval section 30, together with the radially flexible rolling bearing 31, forms the wave generator 34 of the strain wave gear 9.

The circular splines 33 of the strain wave gear 9 are oval in shape on their outer circumference and thus also function as a deformation body of a further wave generator of the further strain wave gear 10, which is rotatably mounted by means of a further radially flexible rolling bearing 35. The circular spline 33 presses the end of a further pot-shaped flex spline 36, which has an external toothing, into an oval shape and, at at least two meshing engagement positions, into meshing engagement with the internal toothing of a further circular spline 37, which is arranged so as to be rotationally fixed relative to the steering gear device housing. The further pot-shaped flexspline 36 acts as the output of the further strain wave gear 10 and is connected in a rotationally fixed manner to the steering gear output shaft 6.

The torque path from the first steering gear input shaft 4 to the steering gear output shaft 6 has several drivably connected gear stages. A first gear stage is configured as a bevel gear 38 with a crown wheel 39 and a pinion 40. The crown wheel 39 is connected in a rotationally fixed manner to the steering gear input shaft 4. The pinion 40 is connected in a rotationally fixed manner via a rotatably mounted shaft 41 to a bell-shaped externally toothed spur gear 42, the toothing of which is in meshing engagement with the toothing of a further rotatably mounted spur gear 43. The spur gear 42 and the further spur gear 43 form a further one of the gear stages. The further spur gear 43 is connected in a rotationally fixed manner to the circular spline 33.

The steering gear device housing 7 has an output shaft bearing receptacle 44 in which a steering gear output shaft bearing 45 for rotationally supporting the steering gear output shaft 6 and a seal 46 are arranged.

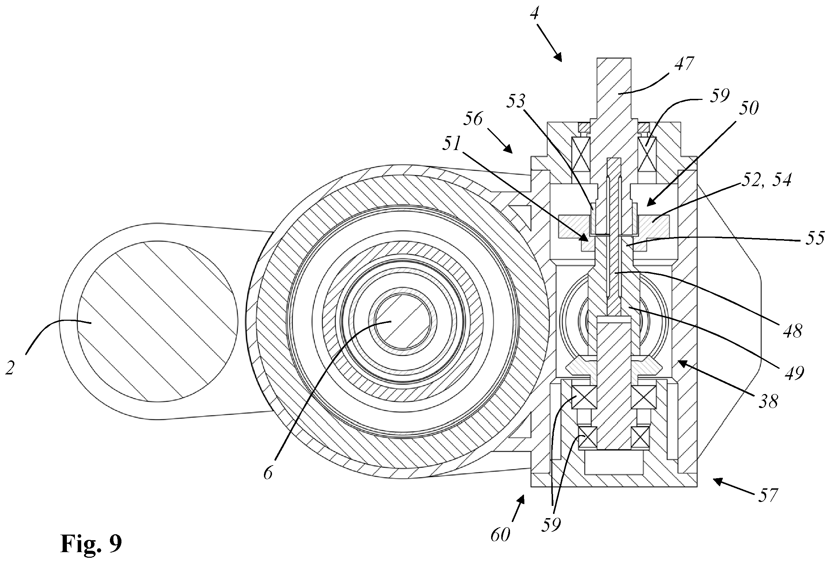

Figure 9 shows a further sectional view of the sixth embodiment of a steering system 1 according to the invention.

Figure 9 shows that the steering gear input shaft 4 is configured with an input section 47 that is designed as a solid shaft, a middle section 48 that is designed as a solid shaft, and a hollow shaft section 49. The middle section 48 is connected at one end directly in a rotationally fixed manner to the input section 47 and at the other end directly in a rotationally fixed manner to the hollow shaft section 49, wherein the hollow shaft section 49 surrounds the middle section 48.

The steering system 1 has a first rotary angle sensor 50 which detects the rotational position and speed of the input section 47 of the first steering gear input shaft 4. The steering system 1 also has a second rotary angle sensor 51 which detects the rotational position of the hollow shaft section 49 of the first steering gear input shaft 4. The first rotary angle sensor 50 has a first rotary angle sensor element 52 and a first coding element 53, for example in the form of a slotted disc, a toothed ring or a magnetic wheel, which interacts with the first rotary angle sensor element 52 without contact. The second rotary angle sensor 51 has a second rotary angle sensor element 54 and a second coding element 55 that interacts with the second rotary angle sensor element 54 without contact, for example in the form of a line disc, a toothed ring or a magnetic wheel, wherein the first rotary angle sensor element 50 and the second rotary angle sensor element 51 can advantageously be arranged together on the same carrier and/or in the same sensor housing. In the figure, the first rotary angle sensor element 50 and the second rotary angle sensor element 51 are illustrated together only schematically as a hatched closed polygon.

The measurement signals from the first rotary angle sensor element 50 and the second rotary angle sensor element 51 are transmitted to a control device (not shown) which controls the motor 2 taking into account the measurement signals. In this case, the control device can deduce the current torque exerted on the first steering gear input shaft 4 by means of a steering handle (not shown) from the respective difference between the rotational angle of the first rotary angle sensor element 52 and the rotational angle of the second rotary angle sensor element 54. This is possible because the input section 47, on which the first coding element 53 is arranged, and the hollow shaft section 42, on which the second coding element 55 is arranged, both belong to the first steering gear input shaft 4, but are located drivably in front of and behind the bevel gear 38. They therefore rotate relative to each other when torque is applied due to torsion, in particular of the comparatively thinly configured middle section 48, with the rotational angle difference being greater the higher the torque applied to the first steering gear input shaft 4 by means of a steering handle (not shown).

It may be advantageous for the control device to control the motor 2 at least as a function of the rotational angle difference between the first rotary angle sensor element 52 and the second rotary angle sensor element 54.

The steering gear device housing 7 has an input shaft bearing receptacle 56 and a further input shaft bearing receptacle 57, wherein the further input shaft bearing receptacle 57 is arranged symmetrically with respect to a horizontal mirror plane relative to the input shaft bearing receptacle 56. A steering gear input shaft bearing module 58, which has a rolling bearing 59, is arranged in the input shaft bearing receptacle 56. The input section 40 is mounted so that it can rotate by means of the rolling bearing 59.

A further steering gear input shaft bearing module 60 is arranged in the further input shaft bearing receptacle 57, which has two rolling bearings 59 for supporting the steering gear input shaft 4.

The steering gear input shaft bearing module 58 and the further steering gear input shaft bearing module 60 serve in particular to support the first steering gear input shaft 4 in a rotatable manner. The steering gear input shaft 4 protrudes outwards through the opening of the input shaft bearing receptacle 56.

If, on the other hand, instead of steering system 1, which may be configured for a left-hand drive vehicle, for example, a mirror-symmetrical steering system 12 for a right-hand drive vehicle is to be manufactured, the steering gear device housing 7 can be used in such a way that the steering gear input shaft 4 protrudes outwards from the steering gear device housing 7 through the opening of the further input shaft bearing receptacle 57, as illustrated in Figures 11 to 13.

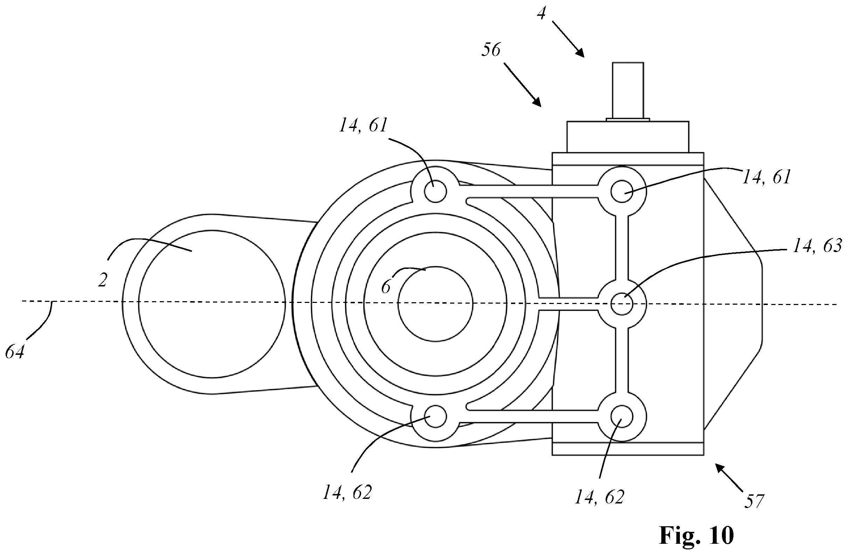

Figure 10 shows the steering system 1 in a side view. It can be seen that there are a total of five fastening elements 14, which may be configured as threaded holes.

There are two upper fastening elements 61, two lower fastening elements 62, and one middle fastening element 63. The fastening elements 14 are arranged symmetrically with respect to a plane 64 in which the axis of rotation of the steering gear output shaft 6 and the middle fastening element 63 are located.

As illustrated in Figures 11 to 13, the steering gear device housing 7 is configured such that, with this housing, a steering system 12 that is mirror-symmetrical to the steering system 1 with respect to a mirror plane 11, in particular a vertical mirror plane, with regard to the arrangement and orientation of the first steering gear input shaft 4, the second steering gear input shaft 5, the steering gear output shaft 6 and the fastening elements 8, can be manufactured. While, in the steering system 1, the two upper fastening elements 61 are arranged at the top, in the mirror-symmetrical steering system 12 the two upper fastening elements 61 are arranged at the bottom. While, in the steering system 1, the two lower fastening elements 62 are arranged at the bottom, in the mirror-symmetrical steering system 12 the two lower fastening elements 62 are arranged at the top.

While the steering gear input shaft 4 in the steering system 1 protrudes outward through the opening of the input shaft bearing receptacle 56, the steering gear input shaft 4 in the mirror-symmetrical steering system 12 protrudes outward through the opening of the additional input shaft bearing receptacle 57.

### List of reference signs:

- 1: Steering system
- 2: Motor
- 3: Steering gear device
- 4: First steering gear input shaft
- 5: Second steering gear input shaft
- 6: Steering gear output shaft
- 7: Steering gear device housing
- 8: Cycloidal gear
- 9: Strain wave gear
- 10: Additional strain wave gear
- 11: Mirror plane
- 12: Mirror-symmetrical steering system
- 13: Steering gear device housing
- 14: Fastening elements
- 15: Distance
- 16: Plane
- 17: Plane
- 18: Output shaft bearing receptacle
- 19: Distance
- 20: Plane
- 21: Plane
- 22: Input shaft bearing receptacle
- 23: Additional input shaft bearing receptacle
- 24: Threaded bore
- 25: Transmission gear device
- 26: Traction means
- 27: First traction means carrier
- 28: Second traction means carrier
- 29: Output shaft
- 30: Oval section
- 31: Radially flexible rolling bearing
- 32: Flexspline
- 33: Circular spline
- 34: Shaft generator
- 35: Additional radially flexible rolling bearing
- 36: Additional flexspline
- 37: Additional circular spline
- 38: Bevel gear
- 39: Crown wheel
- 40: Pinion
- 41: Shaft
- 42: Spur gear
- 43: Additional spur gear
- 44: Output shaft bearing receptacle
- 45: Steering gear output shaft bearing
- 46: Seal
- 47: Input section
- 48: Middle section
- 49: Hollow shaft section
- 50: First rotary angle sensor
- 51: Second rotary angle sensor
- 52: First rotary angle sensor element
- 53: First coding element
- 54: Second rotary angle sensor element
- 55: Second coding element
- 56: Input shaft bearing receptacle
- 57: Additional input shaft bearing receptacle
- 58: Steering gear input shaft bearing module
- 59: Rolling bearing
- 60: Additional steering gear input shaft bearing module
- 61: Upper fastening element
- 62: Lower fastening element
- 63: Middle fastening element
- 64: Plane

## Claims

1. Steering system comprising
a. an electric motor and
b. a steering gear device comprising a first steering gear input shaft that is couplable to a steering shaft, a second steering gear input shaft that is drivably coupled to the electric motor by means of a transmission gear device, and a steering gear output shaft,
**characterized in that**
c. the steering system comprises
i. a cycloidal gear and a strain wave gear, or
ii. two strain wave gears.

2. Steering system according to claim 1, **characterized in that** the steering gear device and the transmission gear device each comprise a cycloidal gear or a strain wave gear.

3. Steering system according to claim 1 or 2, **characterized in that** the torque path from the first steering gear input shaft to the steering gear output shaft has at least two gear stages drivably connected in series.

4. Steering system according to claim 3, **characterized in that** a first of the gear stages is configured as a bevel gear, a worm gear, a spindle gear, a crossed helical gear, or a strain wave gear, and that a second gear stage drivably connected downstream of the first gear stage is configured as a strain wave gear or a cycloidal gear.

5. Steering system according to claim 3 or 4, **characterized by** a steering gear device housing which has fastening elements for fastening the steering gear device housing to a higher-level structure, in particular a vehicle body.

6. Steering system according to claim 5, **characterized in that** the steering gear device housing is configured such that, with this housing, a steering system that is mirror-symmetrical relative to the steering system with respect to a mirror plane, in particular a vertical mirror plane, at least with regard to the arrangement and orientation of the first and second steering gear input shafts, the steering gear output shaft, and the fastening elements, can be manufactured.

7. Steering system according to one of claims 1 to 6, **characterized in that**
a. the steering system components are configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured, or that
b. the steering system components are configured such that, with these components, a steering system that is mirror-symmetrical to the steering system with respect to a mirror plane, in particular a vertical mirror plane, at least with regard to the arrangement and orientation of the first and second steering gear input shafts, the steering gear output shaft, and the fastening elements, can be manufactured when all worms, spindles and helical toothed gears are replaced by identical ones having an opposite helix direction.

8. Steering system according to one of claims 1 to 7, **characterized in that**
a. the transmission gear device has a traction mechanism gear, or **in that**
b. the transmission gear device has a spur gear, or **in that**
c. the transmission gear device has the strain wave gear or one of the two strain wave gears, or **in that**
d. the steering gear device has two strain wave gears drivably connected in series, or **in that**
e. the steering gear device has two strain wave gears drivably connected in series, wherein that the strain wave gears are arranged nested inside each other.

9. Steering system according to one of claims 3 to 8, **characterized in that**
a. the motor is arranged offset, in particular axis-parallel offset, relative to the second gear stage and/or relative to the steering gear output shaft, or **in that**
b. the motor is arranged coaxially with the second transmission stage and/or with the steering gear output shaft.

10. Steering system according to one of claims 1 to 9, **characterized in that** the steering system has at least one of the following features a to c:
a. the steering gear device housing is of multi-part design,
b. the steering gear device housing encloses at least the gear stages drivably connected in series,
c. the steering gear device housing encloses the transmission gear device.

11. Steering system according to one of claims 1 to 10, **characterized in that**
a. the steering gear device housing, in particular in an opening in its housing wall, comprises at least one input shaft bearing receptacle for a steering gear input shaft bearing, or **in that**
b. the steering gear device housing, in particular in an opening in its housing wall, comprises at least one input shaft bearing receptacle for a steering gear input shaft bearing, wherein the steering gear device housing, in particular in a further opening in its housing wall, comprises at least one further input shaft bearing receptacle for a steering gear input shaft bearing, which is configured and arranged to be mirror-symmetrical to the input shaft bearing receptacle with respect to a mirror plane, in particular with respect to a horizontal mirror plane.

12. Steering system according to one of claims 1 to 11, **characterized in that**
a. the steering gear device housing, in particular in an opening in its housing wall, has at least one output shaft bearing receptacle for a steering gear output shaft bearing, or **in that**
b. the steering gear device housing, in particular in an opening in its housing wall, has at least one output shaft bearing receptacle for a steering gear output shaft bearing, wherein the distance between a plane perpendicular to the steering gear output shaft, in which the axis of rotation of the first steering gear input shaft is located, and the plane in which the part of the outside of the steering gear device housing that directly surrounds the output shaft bearing receptacle is located, is in the range of 70 mm to 90 mm, in particular amounts 80 mm.

13. Steering system according to one of claims 1 to 12, **characterized in that** the steering system has at least one of the following features a to c:
a. the axes of rotation of the first steering gear input shaft and the steering gear output shaft are skewed relative to each other,
b. the axes of rotation of the first steering gear input shaft and the steering gear output shaft are arranged in planes perpendicular to each other,
c. the axes of rotation of the first steering gear input shaft and the steering gear output shaft are spaced apart from each other in the range from 80 mm to 100 mm, in particular amounts 90 mm.

14. Steering arrangement with a steering system according to one of claims 1 to 13 and with a steering shaft which is operatively connected to a steering handle and coupled to the first steering gear input shaft.

15. Vehicle, in particular a commercial vehicle, especially truck or bus, which has a steering arrangement according to one of claims 1 to 13 or a steering system according to claim 14.
